# EUROPÄISCHE PATENTANMELDUNG

(11) **EP 4 212 872 A1**
(43) Veröffentlichungstag der Anmeldung: **19.07.2023**
(21) Anmeldenummer: 22151909.3
(22) Anmeldetag: 18.01.2022
(51) Int. Cl.: G01N 30/88, B01D 15/10, G01N 35/10, G01N 30/20

(54) **MODULARES FLÜSSIGKEITSCHROMATOGRAPHIESYSTEM**

(71) Anmelder: Metrohm AG, 9100 Herisau (CH)
(72) Erfinder: Störi, Roland, 9230 Flawil (CH); Hartmann, Thomas, 9200 Gossau (CH); Abderhalden, Daniel, 9205 Waldkirch (CH); Preisig, Christian, 9103 Schwellbrunn (CH); Rohner, Matthias, 9443 Widnau (CH)
(74) Vertreter: Hepp Wenger Ryffel AG

(57) **Zusammenfassung**

Die Erfindung betrifft ein automatisches Flüssigkeitschromatographiesystem (1) mit mindestens einer Fluidhandhabungseinheit(en) (2), die als auswechselbare, modulare Komponente(n) bereitgestellt ist (sind). Das System (1) umfasst weiter mindestens einen Erweiterungsträger (3) mit mindestens einer, vorzugsweise rahmenlosen, Komponentenpositionen (C, C', D, D', E) für die Aufnahme von mindestens einer Fluidhandhabungseinheiten (2).

Das System umfasst auch eine Grundplatte (6) und/oder eine Deckenplatte (4). Der mindestens eine Erweiterungsträger (3) weist mindestens ein mechanisches Verbindungselement (15) auf und das mindestens eine mechanische Verbindungselement (15) ragt bei einem bestimmungsgemässem Gebrauch von einer Ebene in eine benachbarte Ebene hinein, wobei die Ebenen ausgewählt sind aus: Erweiterungsträger (3), Deckenplatte (4) und Grundplatte (6).

## Beschreibung

Die Erfindung betrifft ein automatisches Flüssigkeitschromatographiesystem mit Erweiterungsträger sowie Erweiterungsträger für ein solches System zur modularen Erweiterung eines Flüssigkeitschromatographiesystems.

Es gibt eine große Auswahl an Flüssigkeitschromatographiesystemen für Laboratorien, die eine Reihe von Fluidhandhabungeinheiten, z.B. eine oder mehrere Pumpen, Ventile, Mischer, Sensoreinheiten usw. umfassen. Diese Fluidhandhabungseinheiten sind durch Fluidleitungen in Form von starren oder flexiblen Schläuchen o.ä. miteinander verbunden. Auch wenn einige Systeme für eine bestimmte Art von Anwendung mit einem bestimmten Durchflussweg ausgelegt sein können, besteht häufig ein Bedarf an Flexibilität und der Fähigkeit, den Fluid-Durchflussweg des Systems zu ändern oder zu optimieren. Aufrüstungs-Kits werden oft als externe Zusatzausrüstung geliefert, die neben dem Originalsystem angeordnet werden müssen und somit die Grundfläche des Systems vergrößern. Diese müssen fluidisch als auch elektrisch mit dem System verbunden werden (d.h. mit einem Systemsteuerungsbus oder ähnlichem). Darüber hinaus ist der Austausch defekter Fluidhandhabungseinheiten eine zeitaufwändige und heikle Aufgabe.

Es gibt Versuche im Stand der Technik, der mangelnden Flexibilität dieser Systeme entgegen zu wirken. So beschreibt WO 2010/144037 A1 beispielsweise ein Chromatographiegerät mit austauschbaren modularen Komponenten innerhalb eines festen Gehäuses. Das System hat jedoch den Nachteil, dass das Gehäuse selbst nicht erweiterbar ist. Für die austauschbaren Komponenten sind standardisierte, fixe Positionen zugeteilt, so dass an die Komponenten die Anforderung an eine fixe Grösse gegeben ist.

Ein der WO 2010/144037 A1 ähnliches System wird in WO 2013/028828 A1 beschrieben. Das dort offenbarte System umfasst einen festen Montagerahmen mit einer Reihe von Montageplätzen zur Aufnahme der einzelnen Module. Auch in diesem System sind Grösse und Position durch die Rahmenanordnung vordefiniert.

Es ist eine Aufgabe der Erfindung, die Nachteile des Stands der Technik zu überwinden. Insbesondere ist es eine Aufgabe der Erfindung, ein flexibles Flüssigkeitschromatographiesystem bereitzustellen, das beliebig erweiterbar ist, ohne dass die einzelnen Fluidhandhabungseinheiten in Grösse und Dimension vorbestimmt sein müssen.

Die Aufgabe wird durch die unabhängigen Ansprüche gelöst. Alternative Ausführungsformen finden sich in den abhängigen Ansprüchen.

Ein Aspekt der Erfindung betrifft ein automatisches Flüssigkeitschromatographiesystem. Das Flüssigkeitschromatographiesystem ist so beschaffen, dass eine Fluidströmung zu und von einer Chromatographietrennvorrichtung geleitet wird. Das System umfasst mindestens eine, bevorzugt eine Vielzahl von, Fluidhandhabungseinheit(en), die als auswechselbare, modulare Komponente(n) bereitgestellt ist (sind). Die mindestens eine Fluidhandhabungseinheit ist mit einem Flüssigkeitschromatographie-Fluidweg verbunden oder ist mit letzterem verbindbar. Die mindestens eine Fluidhandhabungseinheit kann mindestens einen Datenträger aufweisen, insbesondere einen Mikrocontroller oder Mikrochip, auf dem Kenndaten der Fluidhandhabungseinheit speicherbar oder gespeichert sind. Optional können von ausserhalb der Einheit empfangene Betriebssignale an die Fluidhandhabungskomponente übertragen und gespeichert werden. Bei mehreren Fluidhandhabungseinheiten ist es möglich, dass insgesamt nur ein Datenträger vorhanden ist, oder aber auch zwei oder mehrere. Beispielsweise ist denkbar, dass jede Fluidhandhabungseinheit einen Datenträger aufweist oder zwei oder mehrere Fluidhandhabungseinheiten mit demselben Datenträger verbindbar oder verbunden sind.

Das System umfasst weiter mindestens einen, vorzugsweise zwei oder mehr, Erweiterungsträger mit mindestens einer, vorzugsweisen rahmenlosen, Komponentenposition für die Aufnahme von mindestens einer, vorzugsweise zwei oder mehr, Fluidhandhabungseinheiten.

Als "rahmenlos" ist insbesondere zu verstehen, dass zwischen den einzelnen Komponentenpositionen keine zusätzliche Trennvorrichtung vorgesehen ist.

Der mindestens eine Erweiterungsträger weist eine offene Frontseite zum Einführen der mindestens einen Fluidhandhabungseinheiten auf. Jede Komponentenposition kann einen Signalanschluss aufweisen, über den der mindestens eine Datenträger einer in der Komponentenposition befindlichen Fluidhandhabungseinheit auslesbar ist. Insbesondere ist eine Verbindung mit dem Microcontroller oder Microchip einer in der Komponentenposition befindlichen Fluidhandhabungseinheit herstellbar.

Das System umfasst weiter eine Grundplatte und/oder eine Deckenplatte.

Der mindestens eine Erweiterungsträger weist zudem mindestens ein mechanisches Verbindungselement auf. Das mindestens eine mechanische Verbindungselement ragt bei einem bestimmungsgemässem Gebrauch von einer Ebene in eine benachbarte Ebene hinein, wobei die Ebenen ausgewählt sind aus: Erweiterungsträger, Deckplatte und Grundplatte. Dabei kann die benachbarte Ebene die nächsthöhere Ebene sein, wenn sich die Ebenen übereinander befinden und/oder eine horizontal benachbarte Ebene, wenn die Ebenen nebeneinander angeordnet sind.

Ein solches Flüssigkeitschromatographiesystem zeichnet sich einerseits durch eine kompakte Bauweise aus, die anderseits aber beliebig erweitert werden kann. Somit kann das System an die räumlichen Gegebenheiten angepasst werden, ohne jedoch Einbussen bei der Funktionalität hinnehmen zu müssen. Ein solches Flüssigkeitschromatographiesystem eignet sich daher gleichermassen für kleine wie auch für grosse Labore. Das mechanische Verbindungelement ermöglicht dabei eine besonders stabile Anordnung zwischen den verschiedenen Ebenen.

Die kompakte Bauweise ermöglicht zudem die Verwendung kürzerer Flusspfade, damit geringere Totvolumina und geringere Analysezeiten.

Als Flüssigkeitschromatographie-Fluidweg ist dabei insbesondere der Weg und die Verbindungen zwischen Reagenzien, Probe(n), Eluenten und Abfall zu verstehen.

Das Flüssigkeitschromatographiesystem kann zwei oder mehrere Erweiterungsträger umfassen, die bei bestimmungsgemässem Gebrauch vertikal derart stapelbar sind, dass das mindestens eine mechanische Verbindungselement von einem Erweiterungsträger in einen benachbarten Erweiterungsträger hineinragt.

Die Anordnung ist vertikal beliebig erweiterbar und durch die mechanischen Verbindungelemente besonders stabil.

Der mindestens eine Erweiterungsträger kann vorzugsweise bei bestimmungsgemässem Gebrauch vertikal derart stapelbar sein, dass das mindestens eine mechanische Verbindungselement von dem mindestens einem Erweiterungsträger in eine benachbarte Grundplatte und/oder Deckenplatte hineinragt.

Vorteilhafterweise sind mindestens zwei Fluidhandhabungseinheiten in dem mindestens einem Erweiterungsträger bei bestimmungsgemässem Gebrauch horizontal in den Komponentenpositionen nebeneinander angeordnet oder anordenbar.

Das hineinragende mechanische Verbindungmittel kann eine Schraube, eine Gewindestange, ein Clip, ein Bolzen, ein Stift, ein Nagel, ein Haken, eine Klammer, eine Feder, einer Niete, ein Profil, ein Winkel, eine Lasche, insbesondere eine Lochlasche, ein Scharnier, eine Schiene oder ein Magnet sein. Der benachbarte Erweiterungsträger und/oder Deckenplatte und/oder Bodenplatte weist bevorzugt ein weibliches Gegenstück auf, insbesondere ein Innengewinde, Aussparungen, Einbuchtungen, Buchse, Hülse, Profil, Dübel, Öse, Nocken, Nut, Magnet.

Weiter kann das Flüssigkeitschromatographiesystem zusätzlich einen automatischen Probenentnehmer umfassen. Im Vergleich zu herkömmlichen Systemen ist das vorliegende System derart kompakt, dass der automatische Probenentnehmer ohne zusätzlichen Platzbedarf einfach in das System integriert werden kann.

Vorzugsweise weist die Deckenplatte zusätzlich einen Reagenz-Organisator auf. So können die Reagenzien platzsparend auf dem System gelagert werden. Zudem erhöht sich somit die Kapazität der Reagenzienflaschen gegenüber herkömmlichen Systemen, was längere Standzeiten ohne Benutzerintervention ermöglicht.

Der Füllstand in den Reagenzienbehältern wird vorzugsweise anhand von Ultraschall-Distanzsensoren gemessen, welche nicht zentral in den Behältern angeordnet sein müssen. So ist es beispielsweise möglich, Rührer einzusetzen, ohne die Distanzmessung zu beeinflussen. Es ist eine kontaktlose, kontinuierliche und genaue Messung der Milliliter möglich.

Vorzugsweise hat jeder Erweiterungsträger die gleiche Standardfronthöhe oder ein ganzzahliges Vielfaches davon und jeder Erweiterungsträger hat die gleiche Standardfrontbreite oder ein ganzzahliges Vielfaches davon. Besonders bevorzugt ist ein quaderförmiger Erweiterungsträger.

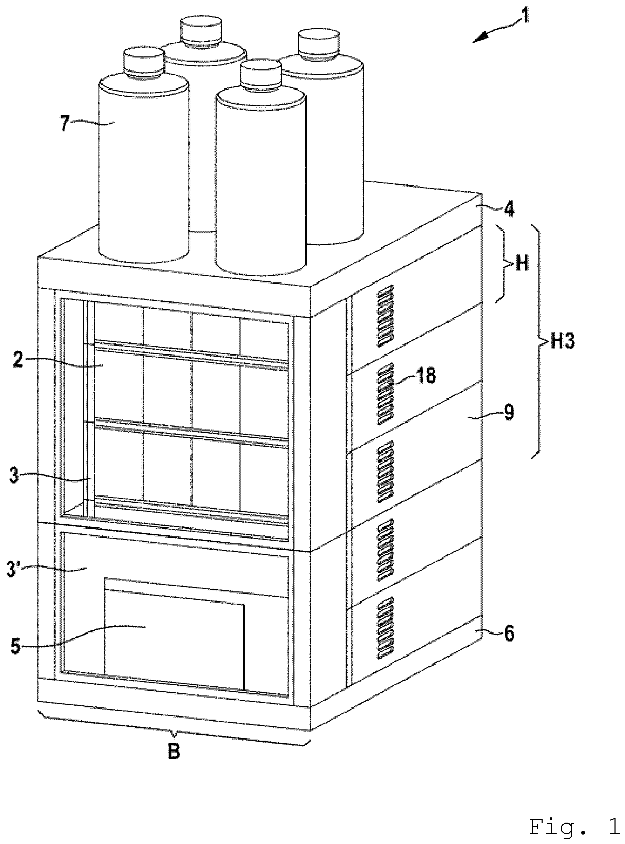

Standardgrössen oder ein Vielfaches davon haben den Vorteil, dass beispielsweise gleiche Bauelemente für die Verkleidung, z.B. Türen oder Seitenpaneele, verwendet werden können. Dies wird nochmal mit Bezug auf Figur 1 erläutert.

Jeder Erweiterungsträger kann ein Netzteil aufweisen. Somit lassen sich die elektrische Leistung und die Anzahl der Erweiterungen beliebig skalieren.

Eine oder mehrere Komponentenpositionen pro Erweiterungsträger sind vorzugsweise in Einführungsrichtung der Fluidhandhabungskomponente gegenüber der Maximalkomponentenpositionstiefe verkürzt. Dies bietet insbesondere Platz, um ein entsprechendes Netzteil bereitzustellen.

Es ist möglich, dass ein Erweiterungsträger sowohl eine oder mehrere verkürzte Komponentenpositionen als auch eine oder mehrere Komponentenpositionen mit Maximalkomponentenpositionstiefe aufweist. Vorzugsweise liegt das Verhältnis der Maximalkomponentenpositionstiefe zu der verkürzten Komponentenpositionstiefe zwischen 1.3:1 und 1.1:1, bevorzugt 1.2:1. Beispielsweise kann die maximale Tiefe 330 mm, die verkürzte Tiefe der Komponentenposition 275 mm betragen.

Der mindestens eine Erweiterungsträger kann zu den Fluidhandhabungseinheiten einen Kühlkanal, einen zentralen Steuerknoten und/oder einen Lüfter aufweisen. Insbesondere können diese an die verkürzten Komponentenpositionen angrenzen.

Vorzugsweise ist eine Fluidführung, insbesondere ein Schlauch, entlang von einem Seitenpaneel (9) führbar, das sich über einen oder mehrere Erweiterungsträger (3) erstreckt.

Bevorzugt wird zwischen dem Erweiterungsträger und der Innenseite eines Seitenpaneels ein Spalt gebildet, durch den die Fluidführung führbar ist; oder es ist in einem dem Seitenpaneel zugeordneten Türmodul eine Aussparung vorgesehen, durch die die Fluidführung führbar ist. Es ist auch denkbar, dass Befestigungsschienen für das Führen von Fluidführungen oder weiterem Zubehör vorgesehen sind, wie weiter unten noch genauer erläutert wird.

Die Zuflussleitungen können entlang des einen Seitenpaneelstapels geführt werden und die Abflussleitungen können entlang des gegenüberliegenden Seitenpaneelstapels geführt werden.

Die Reagenzien- und Lösungsmitteleinlassschläuche sind vorzugsweise an den Seitenpaneelen der Erweiterungsträger fixierbar.

Es ist auch möglich, dass die Deckenplatte über eine oder mehrere Schlauchdurchführungen verfügt. Vorzugsweise sind die Schlauchdurchführungen derart gestaltet, dass sich ein Schlauch samt Kupplung, sogenannten Fittings, durchführen lässt. Bei den Fittings kann es sich beispielsweise um Fittings des Typs M6 oder Fingertights handeln, die üblicherweise in der Hochleistungschromatographie Anwendung finden. Aber auch andere Typen, die dem Fachmann geläufig sind, sind möglich.

Die mindestens eine Fluidhandhabungseinheit kann einen Temperierkörper, der als Heiz- oder Kühlkörper fungieren kann, aufweisen, der bei bestimmungsgemässem Gebrauch in einen Kühlkanal hineinragt. Der Temperierkörper kann sogenannte Heat Pipes umfassen, die mit Kühlrippen verbunden, beispielsweise verlötet, sind. Die Heat Pipes und die Kühlrippen sind vorzugsweise Teil der Fluidhandhabungseinheit. Bei Positionierung der Fluidhandhabungseinheit im Erweiterungsträger können die Kühlrippen in den Kühlkanal des Erweiterungsträgers hineinragen. Alternativ zu Heat Pipes können auch andere wärmeleitfähige Elemente eingesetzt werden.

Die Anordnung ermöglicht ein besonders effizientes Temperieren, insbesondere Kühlen, der Einheit. Somit werden die Analyseergebnisse nicht durch Temperaturunterschiede zwischen den Einheiten beeinflusst oder gar verfälscht. Die Temperatur lässt sich besonders effizient regeln. Die Fehleranfälligkeit, beispielsweise in der Basislinie im Chromatogramm, wird deutlich verringert.

Jeder Erweiterungsträger kann eine Anschlagtüre aufweisen, wobei mehrere bei bestimmungsgemässem Gebrauch übereinander gestapelte Anschlagtüren miteinander verbindbar sind. Somit wird eine Konstanz in der Basislinie trotz rahmenlosen Aufbaus erreicht. Das System ist weniger störanfällig in Bezug auf äussere Temperaturunterschiede, Luftzug und dergleichen.

Es ist auch denkbar, eine Anschlagtüre bereitzustellen, die sich über zwei oder mehrere gestapelte Erweiterungsträger erstreckt.

Die Anschlagtüren können symmetrisch sein, so dass sich diese als linksöffnend oder rechtsöffnend montieren lassen. Somit werden möglichst wenig verschiedene Teile für das Flüssigkeitschromatographiesystem benötigt. Mehr einheitliche Bauteile ermöglichen eine kosteneffiziente Herstellung und einen leichteren Austausch.

Die Türscharniere können gegenüber der offenen Front des Erweiterungsträgers in Einführungsrichtung der Fluidhandhabungseinheiten rückversetzt sein. Dies ermöglicht einen einfacheren Zugang zu den Einheiten.

Unter "offene Front" wird dabei die vertikale Ebene verstanden, die durch die Frontseite der am weitesten in den Raum hineinragenden Komponenten definiert wird.

Die Fluidhandhabungseinheiten sind vorzugsweise ausgewählt aus der Gruppe: Pumpe, insbesondere Hochdruckpumpe oder Peristaltikpumpe; Dosiereinheit; Mehrwegventil; Trennsäule; Detektor; Probenvorbereitungseinheit; Suppressor.

Die Seitenpaneele eines Erweiterungsträgers sind bevorzugt so beschaffen, dass eine Luftströmung quer zur Einführungsrichtung der Fluidhandhabungseinheiten erzeugbar ist. Dies kann beispielsweise durch einen Lüfter und Ansaugöffnungen, insbesondere ein Lochraster im Seitenpaneel, geschehen.

Vorzugsweise ist die Luftströmung quer zur Einführungsrichtung ein Abzweig aus einer Hauptströmungsrichtung, die vorzugsweise zumindest teilweise parallel zur Einführungsrichtung der Fluidhandhabungseinheiten verläuft.

Beim erfindungsgemässen Flüssigkeitschromatographiesystem besteht vorzugsweise die folgende Abfolge in der Anordnung von Luftströmungselementen:
- Ansaugöffnungen, vorzugsweise in einem Seitenpaneel;
- Lüfter;
- ein oder mehrere Kühlkanäle;
- optional: ein Netzteil.

Alternativ zu Ansaugöffnungen im Seitenpaneel können auch Zwischenräume zwischen dem Seitenpaneel und einem Blech, vorzugsweise Aluminiumblech, jedes Erweiterungsträgers vorgesehen sein.

Jeder Erweiterungsträger kann wenigstens einen Lüfter und einen Kühlrippenblock umfassen. Der Kühlrippenblock kann wahlweise an der Erweiterungseinheit selbst oder an der Fluidhandhabungseinheit angebracht sein.

Das Flüssigkeitschromatographiesystem kann einen zentralen Steuerknoten in wenigstens einem Erweiterungsträger umfassen. Der Steuerknoten kann, sofern vorhanden, in einem Haupterweiterungsträger oder in jedem Erweiterungsträger separat vorgesehen sein. Als Haupterweiterungsträger ist dabei der Erweiterungsträger gemeint, der zentral alle Einheiten über den Steuerknoten steuern kann.

Weiter kann das Flüssigkeitschromatographiesystem eine Software umfassen, die mit dem wenigstens einen zentralen Steuerknoten und mit den Microcontrollern oder Microchips der in der Komponentenposition befindlichen Fluidhandhabungseinheit kommuniziert.

Die Software kann programmierbar sein, um
(1) die Fluidhandhabungskomponenten und deren Komponentenpositionen zu erkennen;
(3) die Fluidhandhabungskomponenten in ein Strömungsschema zu koordinieren;
(4) den Benutzer mittels einer grafischen Benutzeroberfläche zu unterstützen beim Herstellen von Fluidverbindungen zwischen den Fluidhandhabungskomponenten; und
(5) die Fluidhandhabungskomponenten zu veranlassen, Fluide gemäss einem Strömungsprotokoll zu und von einer Chromatographietrennvorrichtung zu leiten.

Weiter können zwischen einzelnen Fluidhandhabungseinheiten eine oder mehrere vertikale Tropfkanten angeordnet sein. Vorzugsweise sind diese Tropfkanten durch Dichtungen zum Innenraum der Fluidhandhabungseinheiten abgetrennt. Durch diese Anordnung wird verhindert, dass Flüssigkeit vom Nassbereich in die Einheit(en) läuft.

Weiter kann das System über Befestigungsschienen verfügen. Diese können beispielsweise ebenfalls zwischen den einzelnen Fluidhandhabungseinheiten angeordnet sein und dienen vorrangig der Befestigung von Zubehör und Schläuchen. Besonders bevorzugt ist eine Anordnung unterhalb der vertikalen Tropfkanten, so dass Tropfen von der Tropfkante in die Befestigungsschiene leitbar sind und somit zusätzlich aus dem Inneren der Einheit(en) ferngehalten werden.

Besonders bevorzugt erstreckt sich eine Befestigungsschiene horizontal entlang einer oder mehrerer Fluidhandhabungseinheiten. Die Befestigungsschiene kann sich entlang der Einbaurichtung erstrecken und/oder quer zur Einbaurichtung der Fluidhandhabungseinheiten. Die Dichtung kann oberhalb und/oder unterhalb der Befestigungsschiene angebracht sein und sich über die gesamte Länge der Befestigungsschiene erstrecken. Es ist aber auch möglich, dass nur einzelne Dichtungen in den Bereichen der Tropfkanten angebracht sind.

Diese Dichtanordnung unterstützt zusätzlich den im Wesentlichen rahmenlosen Zusammenbau des Systems.

Weiter kann das Flüssigkeitschromatographiesystem nach Positionierung der mindestens einen Fluidhandhabungseinheit in den mindestens einen Erweiterungsträger eine elektromagnetische Verträglichkeit (EMV) zeigen. Insbesondere ermöglicht die Bauweise die Bereitstellung rahmenloser Komponenten, die jedoch im eingebauten Zustand dennoch die EMV-Erfordernisse erfüllen.

EMV wird definiert als die Fähigkeit einer elektrischen Einrichtung, in ihrer elektromagnetischen Umgebung zufriedenstellend zu funktionieren, ohne diese Umgebung, zu der auch andere Einrichtungen gehören können, unzulässig zu beeinflussen.

EMV umfasst sowohl die Störfestigkeit als auch die Begrenzung der Störaussendung; sie ist in einzelne Teilgebiete unterteilt, z.B. Funkstörung, Entladungen statischer Elektrizität, elektromagnetische Felder sowie schnelle transiente Störgrößen. Dabei sollten die einschlägigen EMV-Normen und -Richtlinien, die dem Fachmann bekannt sind, eingehalten werden. Beispielsweise können dies für die Störaussendungen u.a. EN 61326-1 und EN 61000-6-3/4 sein als auch für die Störfestigkeit die Normen EN 61326-1 und EN 6100-6-1/2.

Ein weiterer Aspekt der Erfindung betrifft einen Erweiterungsträger für ein automatisches Flüssigkeitschromatographiesystem wie vorhergehend beschrieben. Der Erweiterungsträger umfasst:
- mindestens eine, vorzugsweise rahmenlose, Komponentenposition für die Aufnahme mindestens einer Fluidhandhabungseinheit;
- eine offene Frontseite zum Einführen von mindestens einer Fluidhandhabungseinheit;
- optional pro Komponentenposition ein Signalanschluss, über den ein Datenträger einer in der Komponentenposition befindlichen Fluidhandhabungseinheit auslesbar ist, insbesondere eine Verbindung mit dem Microcontroller oder Microchip einer in der Komponentenposition befindlichen Fluidhandhabungseinheit herstellbar ist;

Der Erweiterungsträger weist wenigstens ein mechanisches Verbindungselement auf, welches in eine benachbarte vertikale Ebene hineinragen kann.

Der Erweiterungsträger kann zwei oder mehr rahmenlose Komponentenpositionen für die Aufnahme von zwei oder mehr Fluidhandhabungseinheiten aufweisen. Zwei oder mehr Fluidhandhabungseinheiten können im Erweiterungsträger in einer bei bestimmungsgemässem Gebrauch horizontalen Ebene in den Komponentenpositionen nebeneinander anordenbar sein

Nachfolgend wird die Erfindung anhand von Figuren näher erläutert. Die Figuren zeigen lediglich bevorzugte Ausführungsformen und sind nicht einschränkend zu verstehen. Gleiche Bezugszeichen kennzeichnen gleiche Elemente. Es zeigen:
- Figur 1:: Ein erfindungsgemässes Flüssigkeitschromatographiesystem mit mehreren Erweiterungsträgern in einer perspektivischen Ansicht.
- Figur 2:: Das erfindungsgemässe Flüssigkeitschromatographiesystem aus Figur 1 in einer Vorderansicht mit Details.
- Figur 3:: zeigt einen erfindungsgemässen Erweiterungsträger in einer Draufsicht.
- Figur 4:: zeigt exemplarisch eine mögliche Anordnung verschiedener Fluidhandhabungseinheiten in einem Erweiterungsträger.
- Figur 5a,: zeigt exemplarisch eine Anordnung eines mechanischen Verbindungselements,
- Figur 5b:: zeigt eine Detailansicht des mechanischen Verbindungselements zum Verbinden benachbarter Erweiterungsträger.
- Figur 6:: zeigt exemplarisch ein Seitenpaneel.
- Figur 7:: zeigt einen Reagenz-Organisator in der Draufsicht.
- Figur 8:: zeigt eine Detailansicht einer Schlauchdurchführung.
- Figur 9a:: zeigt eine Ein-Etagen-Anschlagtür.
- Figur 9b:: zeigt eine Mehr-Etagen-Anschlagtür.
- Figur 9c:: zeigt eine Ein-Etagen-Anschlagtür im Schnitt durch den Drehpunkt des Scharniers.
- Figur 10:: zeigt eine Fluidhandhabungseinheit.
- Figur 11:: zeigt eine weitere Ausführungsform einer Fluidhandhabungseinheit.
- Figur 12a:: zeigt ein Seitenpaneel mit Ansaugöffnungen.
- Figur 12b:: zeigt einen Weg der Luftströmung.
- Figur 12c:: zeigt eine mögliche Ausgestaltung von Heat Pipes innerhalb einer Fluidhandhabungseinheit.
- Figur 12d:: zeigt eine zweite Ausgestaltung von Heat Pipes innerhalb einer weiteren Fluidhandhabungseinheit.
- Figur 13a:: Leckflüssigkeitsauffang-System mit einer Tropfenauffangschiene und einer innen liegenden vertikalen Tropfkante in einer perspektivischen Ansicht.
- Figur 13b:: Leckflüssigkeitsauffang-System aus Figur 13a in einer Seitenperspektive.

Figur 1 zeigt beispielhaft ein erfindungsgemässes Flüssigkeitschromatographiesystem 1 aus mehreren Erweiterungsträgern 3 und 3'. Die drei Erweiterungsträger 3 im oberen Bereich weisen jeweils mehrere Komponentenpositionen für Fluidhandhabungseinheiten 2 (schematisch) auf. Ein weiterer Erweiterungsträger 3' im unteren Bereich weist nur eine Komponentenposition für eine Fluidhandhabungseinheit 2 auf. Im unteren Bereich wird die Erweiterungseinheit mit einem automatischen Probenentnehmer 5 als Fluidhandhabungseinheit ausgestattet. Der Erweiterungsträger 3 weist eine Standardhöhe H und eine Standardbreite B auf. Der Erweiterungsträger 3' weist dabei die gleiche Standardbreite B, aber ein Zweifaches der Standardhöhe H des Erweiterungsträgers 3 auf. Durch die Verwendung von Standardhöhen H bzw. -breiten B oder ein Vielfaches davon, z.B. H3, lassen sich dieselben Bauelemente für das System 1 verwenden. Beispielsweise ist keine Anpassung der Seitenpaneele 9 notwendig, da im Falle des Erweiterungsträgers 3' einfach zwei Seitenpaneele 9 mit Standardmass verwendet werden können. Ähnlich verhält es sich mit den Türen (nicht gezeigt). Das System umfasst weiter eine Deckenplatte 4 und eine Grundplatte 6. Auf der Deckenplatte 4 befindet sich ein Reagenz-Organisator 7 mit vier Reagenzienbehältern. Zusätzlich sind die Erweiterungsträger 3, 3' mit Seitenpaneelen 9 verkleidet. Die Seitenpaneele weisen Lochraster 18 als Ansaugöffnungen auf.

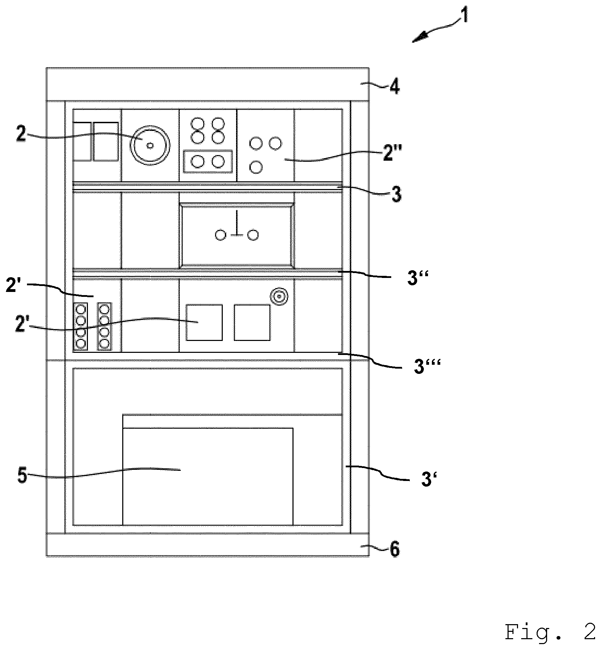

Figur 2 zeigt das erfindungsgemässe System 1 aus Figur 1 in einer Vorderansicht. Der oberste Erweiterungsträger 3 weist fünf Komponentenpositionen auf, von denen vier Positionen mit Fluidhandhabungseinheiten, beispielsweise 2 oder 2", belegt sind. Der dritte Erweiterungsträger 3''' umfasst vier Komponentenpositionen und ist mit zwei Fluidhandhabungseinheiten 2' belegt.

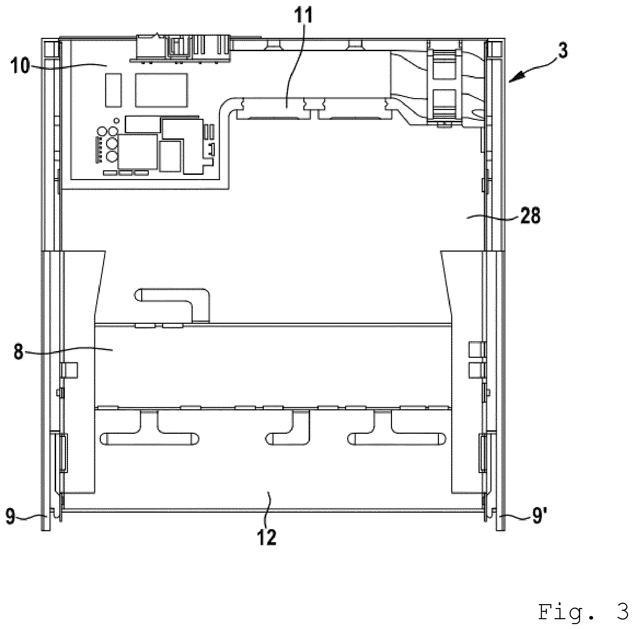

Figur 3 zeigt einen erfindungsgemässen Erweiterungsträger 3 in einer Draufsicht. Der Erweiterungsträger 3 verfügt über einen Blechboden 28, ein Netzteil 10 und Kopplungspositionen 11 zum Koppeln von Fluidhandhabungseinheiten mit integriertem Temperier- bzw. Kühlkörper (nicht gezeigt). Jede Komponentenposition verfügt über einen Signalanschluss 8 in Form eines Unit Switch Board (UNSB). Der Erweiterungsträger verfügt weiter über eine offene Frontseite 12 und Seitenpaneele 9 und 9'.

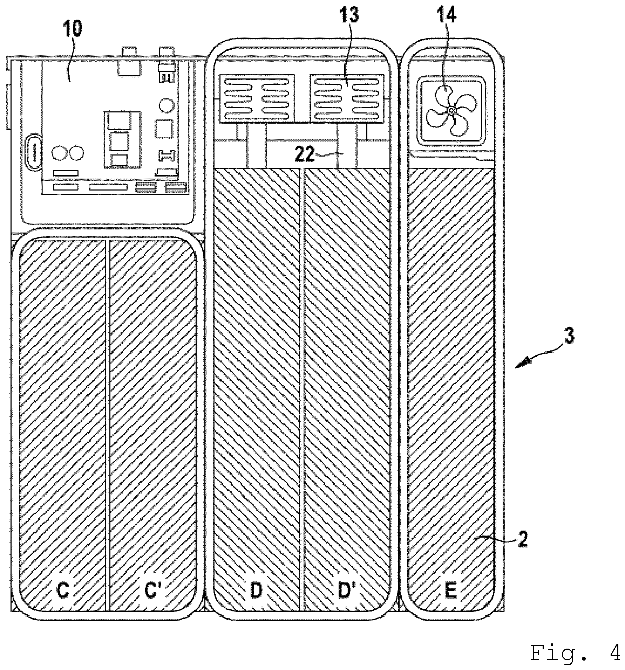

Figur 4 zeigt exemplarisch eine mögliche Anordnung von unterschiedlichen Fluidhandhabungseinheiten 2 innerhalb eines Erweiterungsträgers 3. Fluidhandhabungseinheiten 2 mit Heat Pipes können in diesem Beispiel nur die Komponentenpositionen D und D' besetzen. Die Positionen D und D' sind zusätzlich mit Lüftungskanälen 22 und Kühlrippen 13 ausgestattet. Fluidhandhabungseinheiten 2 mit Kontrollknoten-(CN)Funktionalität auf dem Unit Switch Board können nur auf Position E positioniert werden. Diese Fluidhandhabungseinheiten verfügen mit der CN-Funktionalität über eine eigene Kontrolleinheit. Komponentenposition E verfügt zusätzlich über einen Lüfter 14. Komponentenpositionen C und C' eignen sich nur für Fluidhandhabungseinheiten mit kurzer Bauform. Die Komponentenpositionen D, D' und E eignen sich auch für längere Bauformen der einzelnen Fluidhandhabungseinheiten 2.

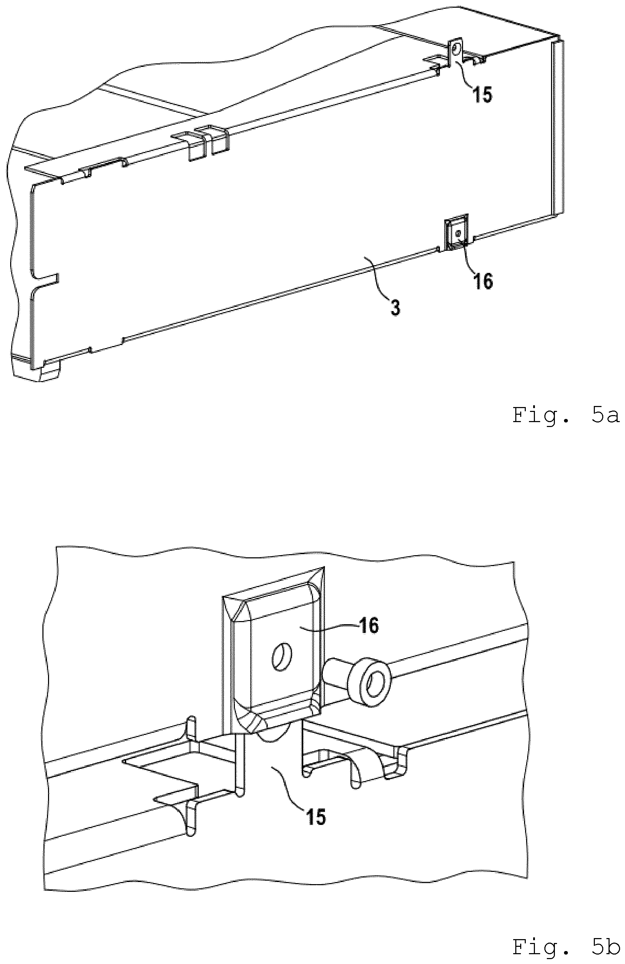

Die Figuren 5a und 5b zeigen exemplarisch ein mechanisches Verbindungselement 15 und das Gegenstück 16. Im Speziellen zeigt Figur 5a eine Seitenansicht eines Erweiterungsträgers 3 mit den Verbindungselementen 15 und 16 und Figur 5b eine Detailansicht zweier Verbindungselemente 15 und 16. Das mechanische Verbindungselement 15 ist als Lochlasche ausgebildet. Sein weibliches Gegenstück 16 ist als Tasche ausgebildet, in welche die Lochlasche hineingeschoben wird (Fig. 5b). Eine Fixierung kann mittels zusätzlicher Schraube erfolgen.

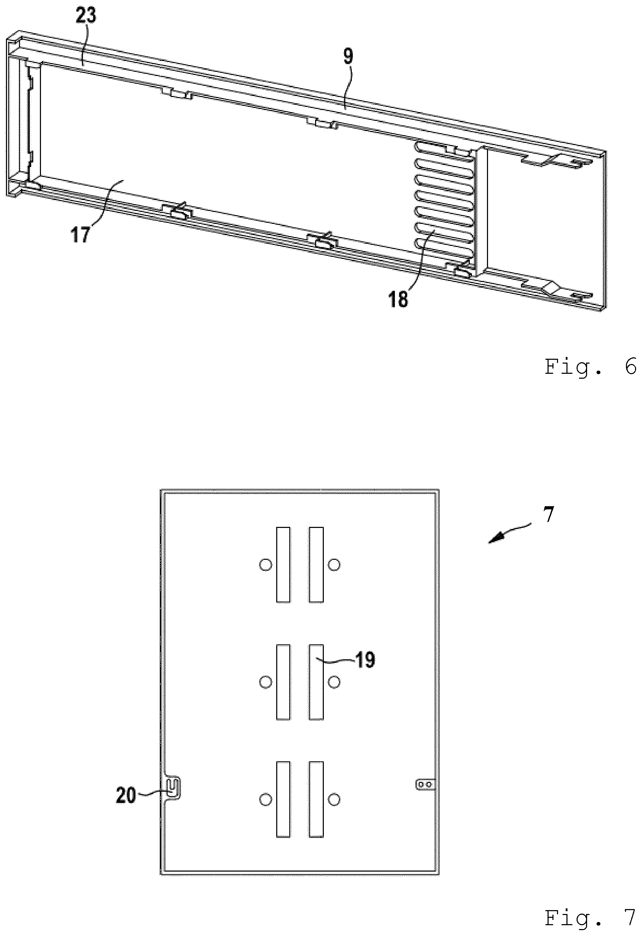

Figur 6 zeigt exemplarisch ein Seitenpaneel 9. Dieses Seitenpaneel 9 verfügt über ein Lochraster 18, durch das Luft angesaugt werden kann. Weiter verfügt das Seitenpaneel 9 über Streben 23, die im montierten Zustand des Seitenpaneels 9 einen Lüftungskanal 17 bilden.

Figur 7 zeigt einen Reagenz-Organisator 7 in einer Draufsicht. Es sind sechs Positionen 19 für Reagenzien erkennbar. Auf der linken Seite befindet sich eine Schlauchdurchführung 20, die bis zu sechs Schläuche oder auch mehrere Kapillaren fixieren kann. Der Reagenz-Organisator 7 kann beispielsweise über vier seitliche Schrauben mit einer Ebene, beispielsweise der Deckenplatte oder einem Erweiterungsträger verbunden werden.

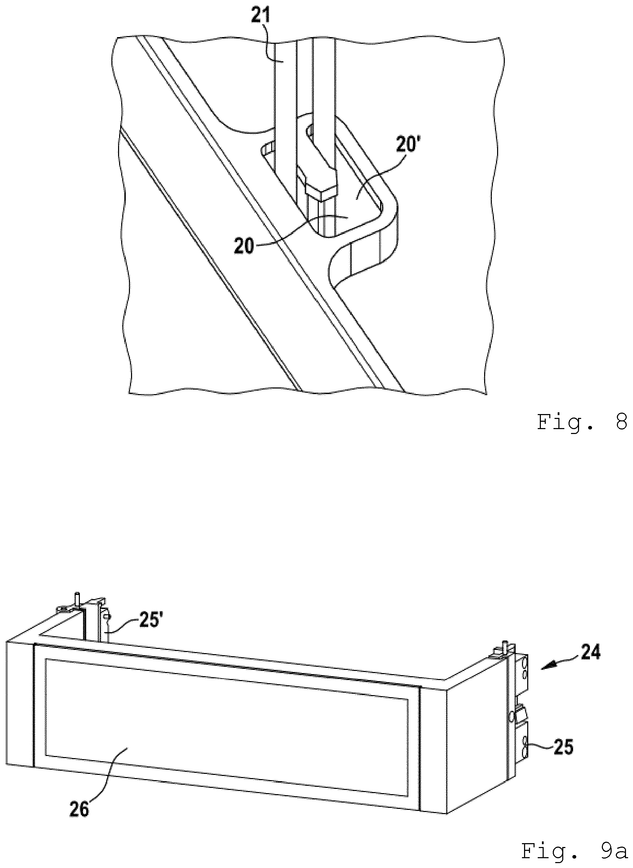

Figur 8 zeigt die Schlauchdurchführung 20 in einer Detailansicht mit Durchführung der Schläuche 21. Die Durchführung 20 ist so ausgelegt, dass sich der Schlauch 21 samt Kupplung durchreichen lässt. So passt die Kupplung, beispielsweise in Form eines M6 Fittings, besonders gut durch den ununterbrochenen Teil 20' der Schlauchdurchführung 20.

Figur 9a zeigt eine Ein-Etagen-Anschlagtür 24 mit einem Ein-Etagen-Scharnier 25. Die Anschlagtür 24 ist symmetrisch gestaltet mit einem Anschlag 25 rechts im Bild und Scharnieren 25' links im Bild als auch einem Anschlag links und Scharnieren rechts (in Abbildung nicht erkennbar). Die Türen 24 lassen sich somit links oder rechts öffnen. Des Weiteren verfügt die Anschlagtür 24 über ein Sichtfenster 26.

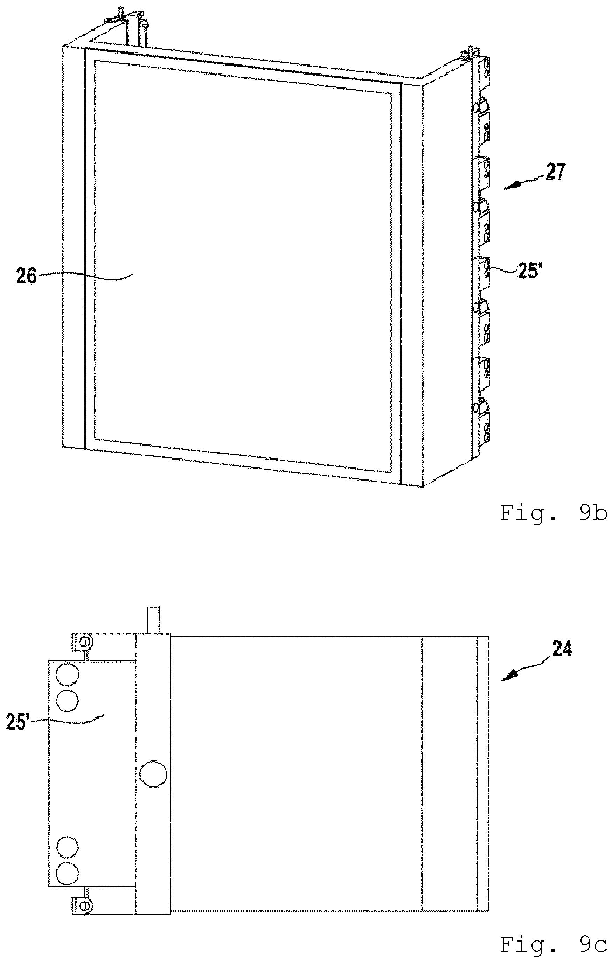

Figur 9b zeigt eine Mehr-Etagen-Anschlagtür 27, die jeweils in Höhe einer Etage ein Scharnier 25' aufweist. Die Scharniere 25' sind wieder symmetrisch auf beiden Seiten angebracht, so dass sich die Türen 27 auch in diesem Fall sowohl links als auch rechts montieren und entsprechend öffnen lassen.

Figur 9c zeigt einen Schnitt durch den Drehpunkt des Scharniers 25' einer Ein-Etagen-Anschlagtür 24. Die Tür 24 verfügt über ein leichtes Moment, so dass die Tür in jeder Öffnungs-Position verbleibt und sich nicht frei öffnet oder schliesst.

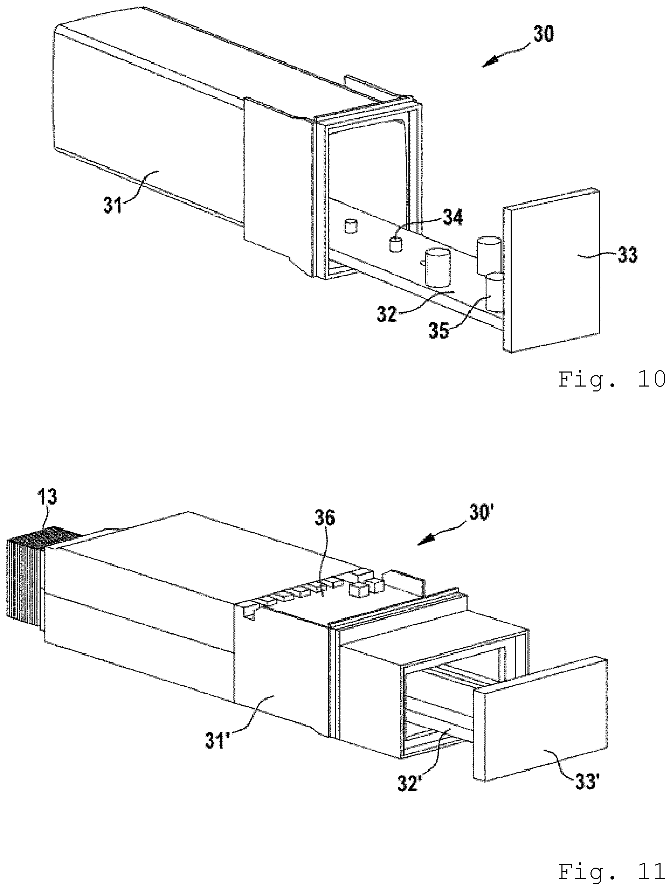

Figur 10 zeigt eine Fluidhandhabungseinheit in Form einer Zubehörschublade 30 ohne Kontrollknoten. Diese kann insbesondere zur Aufnahme von Probenvorbereitungseinheiten zum Einsatz kommen. Die Schublade 30 umfasst ein Gehäuse 31 und ein ausziehbares Element 32 mit einer Frontabdeckung 33. Das ausziehbare Element 32 umfasst Positionierungselemente 34 zum Positionieren von Zubehör. Das ausziehbare Element 32 kann auch Anschlüsse 35 umfassen zur fluiden Verbindung des Zubehörs mit dem System.

Figur 11 zeigt eine weitere Ausführungsform einer Fluidhandhabungseinheit in Form einer weiteren Zubehörschublade 30', insbesondere für eine Trennsäule (nicht gezeigt). Die Schublade 30' kann die gleichen Elemente aufweisen wie mit Bezug auf Figur 10 beschrieben. Darüber hinaus kann die Zubehörschublade 30' eine elektronische Schaltung 36 aufweisen, die bevorzugt oben und am vorderen Teil des Gehäuses 31' angebracht ist. Die Anordnung der Elektronik in dieser Position vereinfacht die elektronische Verknüpfung zum System.

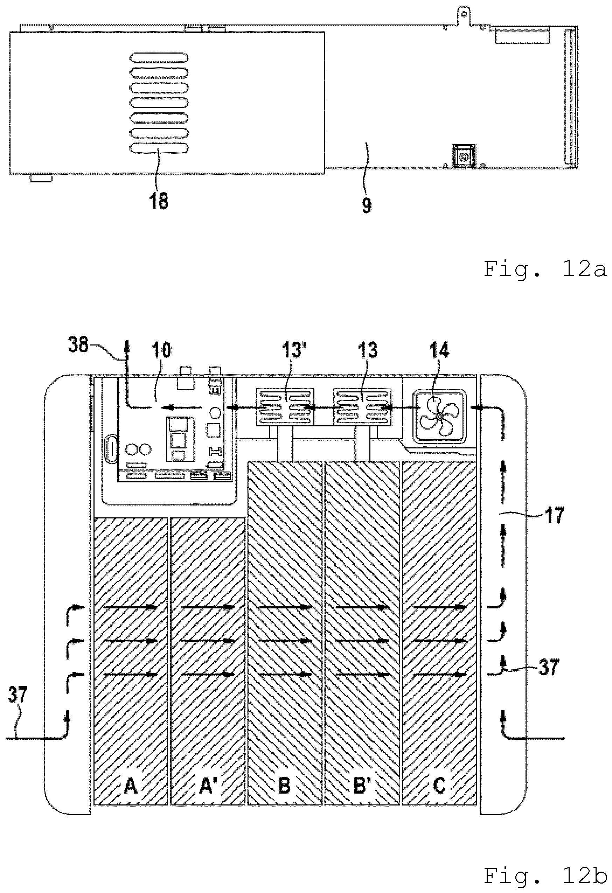

In den Figuren 12a bis 12d wird die Temperaturregelung näher erläutert. In Figur 12a ist ein Seitenpaneel 9 mit einem Lochraster 18 gezeigt. Die Löcher des Lochrasters 18 dienen als Ansaugöffnung, um kühlende Luft durch das Gehäuse zu leiten.

Ein möglicher Verlauf der Kühlluft 37 ist schematisch in Figur 12b gezeigt. Der Hauptluftstrom 37 führt nicht quer durch das Gehäuse hindurch, sondern nur innerhalb des Kühlkanals 17. Angesogen wird die Luft 37 rechts vorne über das Lochraster 18 im Seitenpaneel 9. Auf dem Weg zum Lüfter 14 hin nach hinten streicht die Luft über die Etagenblechseitenwand (schematisch mit den querverlaufenden Pfeilen angedeutet) und kühlt die Etagenblechseitenwand. Nach dem Lüfter 14 werden die beiden Kühlrippenblöcke 13 durchströmt. Die angewärmte Luft ist noch kalt genug, um vor dem Verlassen des Kanals als Abluft 38 das Netzteil 10 zu kühlen. Die Kühlung wird hier mittels erzwungener Konvektion durch den Lüfter 14 bewerkstelligt.

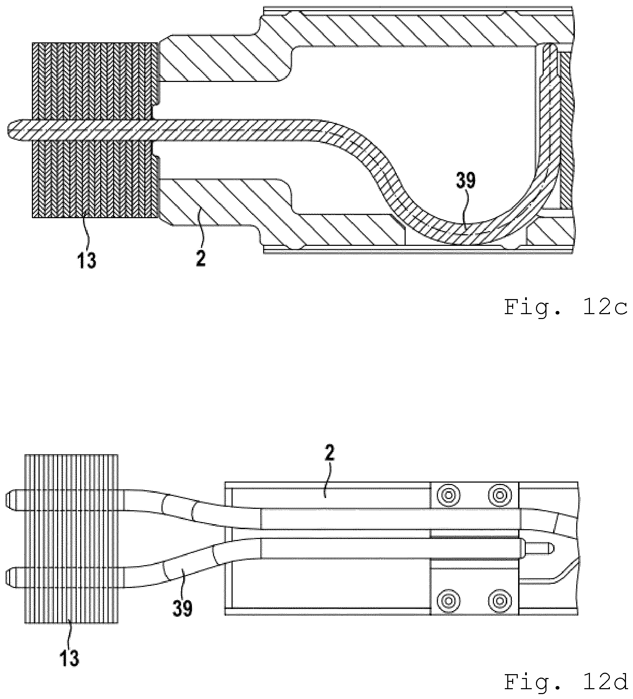

Figuren 12c und 12d zeigen zusätzliche Heat Pipes 39 innerhalb verschiedener Fluidhandhabungseinheiten 2, die mit einem Kühlrippenblock 13 verbunden sind.

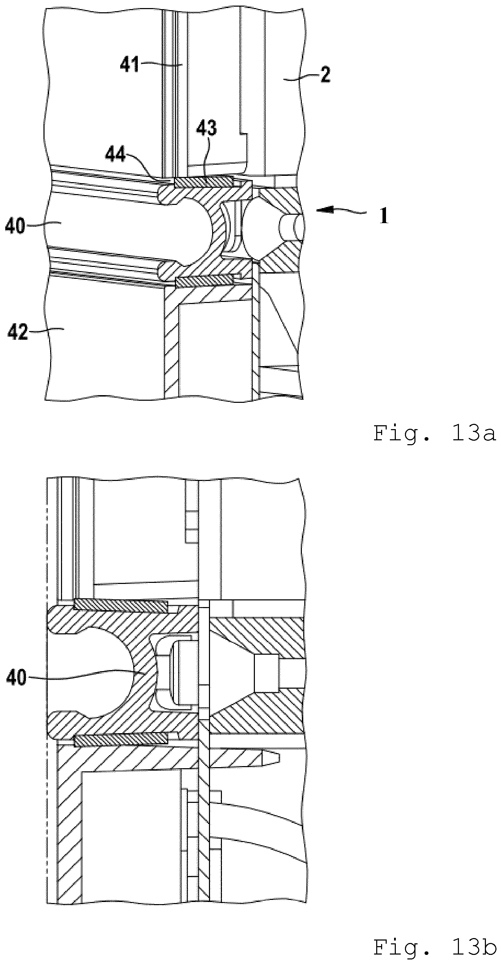

Die Figur 13a zeigt ein Ausführungsbeispiel für ein mögliches Leckflüssigkeitsauffang-System, um zu verhindern, dass sich Flüssigkeit im Inneren des Flüssigkeitschromatographiesystems sammelt. Dabei ist eine Befestigungsschiene 40 für Zubehör, z.B. Schläuche, horizontal zwischen Fluidhandhabungseinheiten 2 des Flüssigkeitschromatographiesystems 1 angebracht. Die Fluidhandhabungseinheiten 2 umfassen vertikale Tropfkanten 41, über die durch Leckage austretende Flüssigkeit zunächst in die Befestigungsschiene 40 und dann weiter über deren Rand und somit vorbei an den einzelnen Komponenten des Systems geleitet werden. Eine zusätzliche Dichtung 43 verhindert ein Eindringen von Wasser in das System. Die Befestigungsschiene weist in einer Seitenansicht ein umgekehrtes C-Profil auf. Die Darstellung im Seitenprofil ist nochmals in Figur 13b gezeigt.

## Patentansprüche

1. Automatisches Flüssigkeitschromatographiesystem (1), so beschaffen, dass eine Fluidströmung zu und von einer Chromatographietrennvorrichtung geleitet wird, wobei das System umfasst:
- mindestens eine, bevorzugt eine Vielzahl, Fluidhandhabungseinheit(en) (2), die als auswechselbare, modulare Komponente(n) bereitgestellt ist (sind),
- wobei die mindestens eine Fluidhandhabungseinheit (2) mit einem Flüssigkeitschromatographie-Fluidweg verbunden oder verbindbar ist; und
- mindestens einen, vorzugsweise zwei oder mehr, Erweiterungsträger (3) mit mindestens einer, vorzugsweise rahmenlosen, Komponentenposition(en) (C, C', D, D', E) für die Aufnahme von mindestens einer, vorzugsweise zwei oder mehr, Fluidhandhabungseinheit(en) (2),
- wobei der mindestens eine Erweiterungsträger (3) eine offene Frontseite (12) zum Einführen der mindestens einen Fluidhandhabungseinheit(en) (2) aufweist;
- eine Grundplatte (6) und/oder eine Deckenplatte (4); **dadurch gekennzeichnet, dass** der mindestens eine Erweiterungsträger (3) mindestens ein mechanisches Verbindungselement (15) aufweist und das mindestens eine mechanische Verbindungselement (15) bei einem bestimmungsgemässen Gebrauch von einer Ebene in eine benachbarte Ebene hineinragt, wobei die Ebenen ausgewählt sind aus: Erweiterungsträger (3), Deckenplatte (4) und Grundplatte (6).

2. Flüssigkeitschromatographiesystem (1) nach Anspruch 1, wobei mindestens eine Fluidhandhabungseinheit (2) mindestens einen Datenträger, insbesondere einen Mikrocontroller oder Mikrochip, aufweist, auf dem Kenndaten der Fluidhandhabungseinheit (2) speicherbar oder gespeichert sind, und, optional, von ausserhalb der Einheit empfangene Betriebssignale an die Fluidhandhabungseinheit (2) übertragen und gespeichert werden können.

3. Flüssigkeitschromatographiesystem (1) nach Anspruch 2, wobei jede Komponentenposition (C, C', D, D', E) einen Signalanschluss (8) aufweist, über den der mindestens eine Datenträger einer in der Komponentenposition (C, C', D, D', E) befindlichen Fluidhandhabungseinheit (2) auslesbar ist, insbesondere eine Verbindung mit dem Microcontroller oder Microchip einer in der Komponentenposition (C, C', D, D', E) befindlichen Fluidhandhabungseinheit (2) herstellbar ist.

4. Flüssigkeitschromatographiesystem (1) nach einem der vorherstehenden Ansprüche, wobei das System zwei oder mehrere Erweiterungsträger (3) umfasst, die bei bestimmungsgemässem Gebrauch vertikal derart stapelbar sind, dass das mindestens eine mechanische Verbindungselement (15) von einem Erweiterungsträger (3) in einen benachbarten Erweiterungsträger (3) hineinragt.

5. Flüssigkeitschromatographiesystem (1) nach einem der vorherstehenden Ansprüche, wobei der mindestens eine Erweiterungsträger (3) bei bestimmungsgemässem Gebrauch vertikal derart stapelbar ist, dass das mindestens eine mechanische Verbindungselement (15) von dem mindestens einem Erweiterungsträger (3) in eine benachbarte Grundplatte (6) und/oder Deckenplatte (4) hineinragt.

6. Flüssigkeitschromatographiesystem (1) nach einem der vorherstehenden Ansprüche, wobei mindestens zwei Fluidhandhabungseinheiten (2) in dem mindestens einen Erweiterungsträger (3) bei bestimmungsgemässem Gebrauch horizontal in den Komponentenpositionen ((C, C', D, D', E) nebeneinander angeordnet oder anordenbar sind.

7. Flüssigkeitschromatographiesystem (1) nach einem der vorherstehenden Ansprüche, wobei jeder Erweiterungsträger (2) die gleiche Standardfronthöhe oder ein ganzzahliges Vielfaches davon hat und jeder Erweiterungsträger (2) die gleiche Standardfrontbreite oder ein ganzzahliges Vielfaches davon hat.

8. Flüssigkeitschromatographiesystem (1) nach einem der vorherstehenden Ansprüche, wobei jeder Erweiterungsträger (3) ein Netzteil (10) aufweist.

9. Flüssigkeitschromatographiesystem (1) nach einem der vorherstehenden Ansprüche, wobei der mindestens eine Erweiterungsträger(3) zu den Fluidhandhabungseinheiten (2) einen Kühlkanal (17), einen zentralen Steuerknoten und/oder einen Lüfter (14) aufweist.

10. Flüssigkeitschromatographiesystem(1) nach einem der vorherstehenden Ansprüche, wobei eine Fluidführung, insbesondere ein Schlauch (21), entlang eines Seitenpaneels (9) führbar ist, das sich über einen oder mehrere Erweiterungsträger (3) erstreckt.

11. Flüssigkeitschromatographiesystem(1) nach Anspruch 10, wobei
a) zwischen dem Erweiterungsträger(3) und der Innenseite eines Seitenpaneels (9) ein Spalt gebildet wird, durch den die Fluidführung führbar ist; oder
b) in einem dem Seitenpaneel (9) zugeordneten Türmodul (24, 25) eine Aussparung vorgesehen ist, durch die die Fluidführung führbar ist.

12. Flüssigkeitschromatographiesystem (1) nach einem der vorherstehenden Ansprüche, wobei die mindestens eine Fluidhandhabungseinheit (2) einen Temperierkörper, vorzugsweise Kühlkörper (13), aufweist, der bei bestimmungsgemässem Gebrauch in einen Kühlkanal (17) des Erweiterungsträgers hineinragt.

13. Flüssigkeitschromatographiesystem (1) nach einem der vorherstehenden Ansprüche, wobei die Fluidhandhabungseinheiten (2) ausgewählt sind aus der Gruppe: Pumpe, insbesondere Hochdruckpumpe oder Peristaltikpumpe; Dosiereinheit; Mehrwegventil; Trennsäule; Detektor; Probenvorbereitungseinheit; Suppressor.

14. Flüssigkeitschromatographiesystem (1) nach einem der vorherstehenden Ansprüche, wobei Seitenpaneele (9) eines Erweiterungsträgers (3) so beschaffen sind, dass eine Luftströmung quer zur Einführungsrichtung der Fluidhandhabungseinheiten (2) erzeugbar ist.

15. Flüssigkeitschromatographiesystem (1) nach einem der vorherstehenden Ansprüche, wobei die folgende Abfolge in der Anordnung von Luftströmungselementen besteht:
- Ansaugöffnungen (18), vorzugsweise in einem Seitenpaneel (9) ;
- Lüfter (14);
- ein oder mehrere Kühlkanäle (17);
- optional: ein Netzteil (10).

16. Flüssigkeitschromatographiesystem (1) nach einem der vorherstehenden Ansprüche, wobei zwischen den Fluidhandhandhabungseinheiten (2) eine oder mehrere vertikale Tropfkanten (41) angeordnet sind.

17. Flüssigkeitschromatographiesystem (1) nach Anspruch 16, wobei die Tropfkanten (41) durch Dichtungen (43) zu einem Innenraum einer Fluidhandhabungseinheit (2) abgetrennt sind.

18. Flüssigkeitschromatographiesystem (1) nach einem der vorherigen Ansprüche, wobei das System (1) weiter Befestigungsschienen (40) zum Anbringen von Fluidführungen und/oder Zubehör aufweist.

19. Erweiterungsträger (3) für ein automatisches Flüssigkeitschromatographiesystem (1) gemäss einem der Ansprüche 1 bis 18, aufweisend:
- mindestens eine, vorzugsweise rahmenlose, Komponentenposition (C, C', D, D', E) für die Aufnahme mindestens einer Fluidhandhabungseinheit (2);
- eine offene Frontseite (12) zum Einführen von mindestens einer Fluidhandhabungseinheit (2);
wobei der Erweiterungsträger (3) wenigstens ein mechanisches Verbindungselement (15) aufweist, welches in eine benachbarte vertikale Ebene hineinragen kann.

20. Erweiterungsträger nach Anspruch 19, wobei pro Komponentenposition (C, C', D, D', E) ein Signalanschluss (8), über den ein Datenträger einer in der Komponentenposition (C, C', D, D', E) befindlichen Fluidhandhabungseinheit (2) auslesbar ist, insbesondere eine Verbindung mit dem Microcontroller oder Microchip einer in der Komponentenposition (C, C', D, D', E) befindlichen Fluidhandhabungseinheit (2) herstellbar ist.

21. Erweiterungsträger (3) nach Anspruch 19 oder 20, wobei der Erweiterungsträger (3) zwei oder mehr rahmenlose Komponentenpositionen (C, C', D, D', E) für die Aufnahme von zwei oder mehr Fluidhandhabungseinheiten (2) aufweist und wobei zwei oder mehr Fluidhandhabungseinheiten (2) im Erweiterungsträger (3) in einer bei bestimmungsgemässem Gebrauch horizontalen Ebene in den Komponentenpositionen (C, C', D, D', E) nebeneinander anordenbar sind.
